# EUROPÄISCHE PATENTSCHRIFT

(11) **EP 3 091 333 B1**
(45) Veröffentlichungstag und Bekanntmachung des Hinweises auf die Patenterteilung: **03.07.2019**
(21) Anmeldenummer: 15167033.8
(22) Anmeldetag: 08.05.2015
(51) Int. Cl.: G01C 15/00, G01S 17/66, G01S 7/48, G01S 17/42

(54) **SCANVERFAHREN UND VERMESSUNGSSYSTEM MIT SCANFUNKTIONALITÄT**
SCANNING METHOD AND SURVEYING SYSTEM WITH SCAN FUNCTIONALITY
PROCÉDÉ DE BALAYAGE ET SYSTÈME D'ARPENTAGE DISPOSANT D'UNE FONCTIONNALITÉ DE BALAYAGE

(43) Veröffentlichungstag der Anmeldung: 09.11.2016
(73) Patentinhaber: Leica Geosystems AG, 9435 Heerbrugg (CH)
(72) Erfinder: Herbst, Christoph, A-6850 Dornbirn (AT); Spettel, Patrick, A-6932 Langen bei Bregenz (AT)
(74) Vertreter: Kaminski Harmann

(56) Entgegenhaltungen:
- US-A1- 2014 078 519

## Beschreibung

Die Erfindung betrifft ein Scanverfahren zum Ableiten einer Information über Objektoberflächen für ein Vermessungssystem mit Scanfunktionalität zur räumlichen Vermessung von Objekten nach dem Oberbegriff von Anspruch 1, sowie ein Vermessungssystem mit Scanfunktionalität nach dem Oberbegriff des Anspruchs 15.

3D-Scannen ist eine sehr wirkungsvolle Technologie um innerhalb von Minuten oder Sekunden Millionen von räumlichen Messpunkten von Objekten zu produzieren. Typische Messaufgaben sind die Aufnahme von Objekten bzw. deren Oberflächen wie Industrieanlagen, Häuserfassaden oder historischen Gebäuden aber auch von Unfallorten und Verbrechensszenen. Vermessungsgeräte mit Scanfunktionalität sind beispielsweise Totalstationen und Laserscanner wie der Leica P20 oder Leica Multi Station 50, welche verwendet werden, um 3D-Koordinaten von Oberflächen zu messen bzw. zu erstellen. Zu diesem Zweck müssen sie in der Lage sein, den Messstrahl einer Entfernungsmessvorrichtung über eine Oberfläche zu führen und dabei gleichzeitig Richtung und Entfernung zum Messpunkt zu erfassen. Aus der Entfernung und der damit korrelierten Richtungsinformation für jeden Punkt wird mittels Datenverarbeitung eine sogenannte 3D-Punktwolke generiert.

Vom prinzipiellen Aufbau her sind derartige terrestrische Scanner also ausgebildet, um mit einem, meist elektrooptischen und laserbasierten, Entfernungsmesser eine Distanz zu einem Objektpunkt als Messpunkt zu erfassen. Eine ebenfalls vorhandene Richtungs-Ablenkeinheit ist dabei derart ausgebildet, dass der Messstrahl des Entfernungsmessers in zumindest zwei unabhängige Raumrichtungen abgelenkt wird, wodurch ein räumlicher Messbereich aufgenommen werden kann. Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, verformbare optische Komponenten etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können. Der Entfernungsmesser kann beispielsweise nach den Prinzipien der Time-Of-Flight- (TOF), Phasen-, Wave-Form-Digitizer- (WFD) oder interferometrischen Messung ausgeführt sein. Für schnelle und genaue Scanner ist insbesondere eine kurze Messzeit bei gleichzeitig hoher Messgenauigkeit gefordert, beispielsweise eine Distanzgenauigkeit im mm-Bereich oder darunter bei Messzeiten der Einzelpunkte im Bereich von Sub-Mikrosekunden bis Millisekunden. Der Messbereich reicht dabei von wenigen Zentimetern bis hin zu einigen Kilometern.

Von besonderer Bedeutung ist dabei die räumliche Messauflösung. Sie bestimmt, welche Details noch erkannt werden können, aber auch die Dauer des Scanvorgangs und die dabei anfallende Datenmenge. Messprojekte mit modernen Hochgeschwindigkeitsscannern produzieren 3D-Punktwolken mit einer Mächtigkeit von beispielsweise mehreren Hundert Millionen oder mehreren Milliarden Objektpunkten und darüber hinaus. Das Speichern, Senden und Verarbeiten der damit einhergehenden enormen Datenmenge stellt grosse Herausforderungen an Hard- und Software. Z.B. hängt die Ausführungsgeschwindigkeit von Programmen zur Auswertung der 3D-Daten stark von der Anzahl der Scanpunkte ab. Deshalb wäre es von Vorteil, wenn nur diejenigen Punkte bzw. Daten aufgezeichnet werden würden, die für die jeweilige Messaufgabe tatsächlich von Relevanz sind.

Bei Scanvorgängen nach dem Stand der Technik ist es demgegenüber jedoch meist so, dass das akquirierte Datenvolumen unnötig aufgebläht ist. Bei Scannern nach dem Stand der Technik wird versucht, einen vom Nutzer vorgegebenen Punktabstand zu einer vorgegebenen Distanz, d.h. eine vorgegebene Auslösung, mittels gleichschrittiger Winkelablenkung zu erreichen, es wird also jeweils bei gleichen Winkelabständen eine Entfernungsmessung ausgelöst. Der gewünschte Punktabstand würde damit jedoch auf allen zu messenden Oberflächen nur erzielt, wenn sich der Scanner im Mittelpunkt einer Kugel befände. Tatsächlich ergeben sich in der Realität in Abhängigkeit der Entfernung und Ausrichtung der Objektoberflächen divergierende Punktabstände, darunter extrem kleine Punktabstände und damit extreme Punktdichten im Nahbereich des Vermessungsgeräts, besonders im Zenit und um den Aufstellungsort herum. Meist sind speziell diese Nahbereichsmesspunkte gar nicht von Interesse, da z.B. der Boden oder die Decke der Messumgebung kein zu vermessendes Objekt darstellen.

Zusätzlicher Datenballast entsteht dadurch, dass bei sehr kleinen Messdistanzen die Punktabstände im Nahbereich aufgrund der festgelegten Winkelabstände sogar kleiner sein können als der Durchmesser des Messstrahls, so dass derartige Punktabstände zu redundanten Messungen führen und daher selbst bei an sich gewünschten Messobjekten keinen Gewinn an räumlicher Auflösung bringen. Darüber hinaus werden bei einem Scan teilweise Punkte generiert, die zwar an sich ein Plus an räumlicher Auflösung, aber dennoch meist unnötige Daten darstellen, da sie keinen echten Informationsgewinn ergeben. Hierbei handelst es sich z.B. um Punkte auf einer (nicht gekrümmten) Ebene, da diese idealerweise durch drei Punkte (die nicht auf einer Geraden liegen) ausreichend definiert ist, weshalb in solchen Bereichen eine relativ kleine Punktdichte ausreichend wäre.

Somit ist es hinsichtlich Datenvolumen und auch Scandauer meist unnötig und ineffizient und deshalb nicht wünschenswert, den Scanbereich mit der höchstmöglichen Auflösung zu erfassen. Andererseits werden dadurch unter Umständen je nach Abstand zum Scanner und gewählter Sollauflösung hochrelevante Bereiche mit einer derart geringen räumlichen Auflösung gescannt, dass ein Informationsdefizit vorliegt. Solche Bereiche besonders hoher Relevanz sind z.B. Kanten, gekrümmte Ebenen oder andere Formänderungen. Wünschenswert wäre, dass gezielt solch hochrelevante Objektstellen mit erhöhter Punktdichte bzw. verringertem Abstand der 3D-Punkte zueinander als in anderen Bereichen der 3D-Punktwolke gescannt werden, damit diese möglichst detailliert abgebildet werden.

Im Stand der Technik ist eine Vielzahl von Methoden bekannt, mit denen im post-processing, nach Abschluss der Messung und mit externen leistungsstarken Rechnern, die Daten der 3D-Punktwolke bearbeitet werden können, z.B. durch Filtern, Glätten oder Interpolieren. Allerdings ist z.B. eine rechnerische Erhöhung der Genauigkeit der 3D-Punkte nur bedingt möglich bzw. zielführend, da z.B. der Verlauf diskontinuierlicher Stellen wie Objektkanten spekulativ bleibt. Weiter ist nachteilig, dass auch überflüssige Daten bis dahin gespeichert und verarbeitet werden müssen, so dass z.B. die Anforderungen an die Datenverarbeitungskapazitäten des Vermessungsgeräts oder der Zeitaufwand für Datenübertragung und -verarbeitung bis zum Abschluss des post-processings weiterhin sehr hoch bleiben.

Die WO 2013/12826 offenbart demgegenüber ein Verfahren für einen stationären Laserscanner zur Datenbehandlung in Echtzeit, d.h. noch während der Datenaufnahme beim Scannen. Dabei erfolgt im Verlauf des Scans eine flächenhafte Segmentierung der 3D-Rohdaten in einzelne Layer mit einer Gitterstruktur, die sich durch die Layer zieht, für eine jeweils separate Kodierung der Messkomponenten Distanz zum Oberflächenpunkt, (beide) Ausrichtungswinkel des Messstrahls und Intensität der empfangenen Messstrahlung. Beim Codec zur Datentransformation und -komprimierung handelt es sich bevorzugt um einen ZIP-Komprimierungs-Algorithmus für Distanz und Ausrichtungswinkel und ein JPEG-Komprimierungs-Algorithmus für die Intensität. Für die Intensität zieht die Offenbarung der WO 2013/12826 eine Komprimierung der Daten in Betracht, welche mit einem teilweisen Verlust an Information bzw. Präzision einhergeht, wie es bei Verwendung eines JPEG-Komprimierungs-Algorithmus der Fall ist. Dagegen lehrt die Offenbarung der WO 2013/12826 explizit, dass die Kompression der weiteren Komponenten (Distanz, Winkel) ohne Verlust an Information bzw. Präzision, wie z.B. bei einer Komprimierung basierend auf einem ZIP-Algorithmus, erfolgt. Mit anderen Worten erfolgt (mit Ausnahme der die Intensität betreffenden Daten) ein verlustfreies Speichern der Daten und damit keine Reduktion der Daten im eigentlichen Sinn. D.h. es erfolgt nachteilig kein Aussortieren von an sich unnötigen bzw. ungewünschten Daten, sondern lediglich eine Verringerung des zu speichernden bzw. zu übertragenden Datenvolumens durch geschickte Organisation und Komprimierung der Daten. Ein Aussortieren von gescannten Punkten wird in der WO 2013/12826 nur für den Fall offenbart, dass die Scangeschwindigkeit nicht optimal auf die Segmentierung der Daten abgestimmt ist, so dass ohne Aussortieren eine Störung der Datenorganisationsstruktur erfolgen würde, z.B. falls eine Zeile des Strukturgitters aufgrund einer zu geringen Scangeschwindigkeit ansonsten doppelt gefüllt werden würde. Die Scandaten werden also an die der Datensegmentierung dienenden Gitterstruktur angepasst, während die Gitterstruktur strikt fixiert bleibt. Abgesehen von dieser Ausnahme, d.h. bei einem optimalen bzw. fehlerfreien Scan, stimmen die endgültigen, im Festspeicher abgelegten Daten der 3D-Punkte inhaltlich mit den unmittelbar aufgenommenen Punktdaten überein.

Die US20140078519 offenbart ein Verfahren zur dynamischen Anpassung einer Scangeschwindigkeit oder einer Erfassungsrate für die Aufnahme einer Punktemenge in Abhängigkeit von einem Informationsgehalt einer aufgenommenen Punktemenge.

Aufgabe der vorliegenden Erfindung ist es, ein verbessertes Scanverfahren für ein Vermessungssystem mit Scanfunktionalität bereitzustellen.

Eine weitere Aufgabe der vorliegenden Erfindung ist die Bereitstellung eines ebensolchen Scanverfahrens, bei welchem der Informationsgehalt des Scans in Echtzeit und gezielt beeinflusst werden kann.

Eine weitere Aufgabe der vorliegenden Erfindung ist die Bereitstellung eines ebensolchen Scanverfahrens, mit dem das Aufkommen der Scandaten gezielt beeinflussbar ist.

Eine weitere Aufgabe der vorliegenden Erfindung ist die Bereitstellung eines ebensolchen Scanverfahrens, mit dem defizitäre Scanbereiche bzw. Bereiche besonderen Interesses vor Ort ermittelt und aufgebessert werden können.

Eine weitere Aufgabe der vorliegenden Erfindung ist die Bereitstellung eines ebensolchen Scanverfahrens, bei welchem die Auflösung des Scans über den Scanbereich harmonisierbar ist.

Eine weitere Aufgabe besteht in der Bereitstellung eines Vermessungssystems mit Scanfunktionalität zur Durchführung eines solchen Verfahrens.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft Scanverfahren zum Ableiten einer Information über Oberflächen von Objekten für ein eine Steuer- und Auswerteeinheit aufweisendes Vermessungssystem mit Scanfunktionalität. Bevorzugte Beispiele für ein solches Vermessungssystem sind ein Laserscanner oder eine Totalstation. Mittels eines Scanvorgangs erfolgt ein erstes Aufnehmen einer Punktemenge aus erfassten Objektpunkten, welche mittels eines Messstrahls, z.B. eines Laserstrahls, erfasst werden. Dabei wird durch fortlaufendes Ausrichtungsändern des Messstrahls gemäss eines bekannten ersten Scanmusters und Scanbereichs ein oder mehrere Objekte abgetastet, wobei die jeweilige Entfernung zum Objektpunkt und die jeweilige Ausrichtung der für eine Entfernungsmessung emittierten Messstrahlung bestimmt werden. Erfindungsgemäss wird die aufgenommene Punktemenge der erfassten Objektpunkte, also die Gesamtheit aller gescannten Punkte der Objekte im Scanbereich, in einem flüchtigen Speicher der Steuer- und Auswerteeinheit vorgehalten. Vor einem Ablegen in einem permanenten Speicher erfolgt durch die Steuer- und Auswerteeinheit als Teil des Scanvorgangs eine Adaption der aufgenommenen Punktemenge, wodurch eine adaptierte, insbesondere reduzierte, Punktemenge erzeugt wird. Die Adaption erfolgt dabei in Abhängigkeit wenigstens einer Punktdichte der aufgenommenen Punktemenge. Im permanenten Speicher abgelegt wird lediglich die adaptierte Punktemenge bei endgültigem Verlust der aufgenommenen Punktemenge.

Gemäss dem Verfahren erfolgt also eine Anpassung der aufgenommenen Punktemenge noch bevor diese dauerhaft gespeichert wird, so dass es sich bei dem vorliegenden Verfahren um ein Echtzeitverfahren handelt. Anders formuliert erfolgt erfindungsgemäss ein Erzeugen einer angepassten Punktemenge aus der unmittelbar erzeugten Punktemenge, wobei nur die angepasste Punktemenge dauerhaft gespeichert wird. Als Kriterium, anhand dessen die Anpassung ausgeführt wird, dient dabei eine Punktdichte der aufgenommenen Punktemenge, d.h. die Dichte der abgetasteten Objektpunkte des gesamten Scanbereichs oder von Teilen davon, also von einzelnen Subbereichen.

Die Adaption umfasst eine jegliche Veränderung der aufgenommenen Punktemenge in Abhängigkeit einer Punktdichte. Bevorzugt handelt es sich um eine Reduktion, so dass die adaptierte Punktemenge im Vergleich zur aufgenommenen Punktemenge reduziert ist, wodurch die adaptierte Punktemenge weniger Daten aufweist als die aufgenommene Punktemenge, und somit ein geringeres Datenaufkommen in einem Festspeicher abgelegt werden muss als ohne Anwendung der Adaption. Die Adaption erfolgt bevorzugt bereits während der Messdatenakquirierung.

Die Adaption erfolgt beispielsweise, indem innerhalb wenigstens eines vorbestimmten Teilbereichs des Scanbereichs gemäss vorbestimmter Auswahlkriterien die Punktdichte selbst adaptiert, beispielsweise durch Ausdünnen und/oder Mitteln reduziert, wird. Bei einem solchen Subbereich handelt es sich z.B. um einen Bereich im oder um den Nadir eines Laserscanners, beispielsweise innerhalb eines Winkels von +30° bis -30°. In diesem Bereich, der sehr nahe beim Laserscanner liegt, ist die Punktdichte i.d.R. besonders hoch, wobei ein solcher Bereich gleichzeitig i.d.R. von geringem Interesse für die Vermessungsaufgabe ist, da der Boden, auf dem sich der Scanner befindet, normalerweise nicht eigentlich gescannt zu werden braucht. Deshalb erfolgt innerhalb des Teilbereichs z.B. ein simples Ausdünnen anhand der Reihenfolge der Objektpunkte, z.B. indem nur jeder fünfte oder zehnte Objektpunkt einer Scanzeile, je nach gewählter Auflösung und damit Winkelschrittweite, beibehalten und der Rest verworfen wird. Es wird also z.B. nur jeder fünfte oder zehnte Scanpunkt in die adaptierte Punktemenge aufgenommen und die restlichen Objektpunkte des Bereichs endgültig gelöscht. Alternativ wird beispielsweise ein Mittelwert aller oder eines Teils der Objektpunkte des Teilbereichs ermittelt und dieser anstelle der aufgenommenen Punkte in der adaptierten Punktemenge festgehalten. Bei Anwendung eines solchen von vorneherein "stur" festgelegten Adaptionskriteriums ist es folglich nicht notwendig, die Punktdichte der aufgenommen Punktemenge des Subbereichs explizit zu bestimmen. Dies ist ohne grosse Unsicherheit möglich, da die Entfernung zum Objekt, also vorwiegend des Bodens, in einem solchen Subbereich um den Nadir nur wenig variiert und damit die tatsächlich vorliegende Punktdichte zu einer vorgegebenen Sollauflösung nur wenig schwankt bzw. quasi als vorbekannt gelten kann.

Gemäß der Erfindung erfolgt die Adaption in Abhängigkeit wenigstens eines Punktdichteindikators für die aufgenommene Punktemenge, welcher anhand der bestimmten Entfernungen und Ausrichtungen als Teil des Scanvorgangs ermittelt wird. Der Punktdichteindikator wird optional so bald als möglich, d.h. bereits während des Scanvorgangs in Echtzeit in Bezug auf bereits erfasste Objektpunkte bzw. gescannte Teilbereiche des Scanbereichs ermittelt. Als weitere Option basiert der Punktdichteindikator auf geschätzten räumlichen Abständen von erfassten Objektpunkten zueinander, wobei die Punktabstände beispielsweise anhand der Entfernung zu einem Objektpunkt und dem Winkel zwischen den beiden Ausrichtungen des Messstrahls zu diesem Objektpunkt und einem benachbarten Objektpunkt ermittelt werden. Der Punktdichteindikator wird beispielsweise herangezogen, um punkt- oder bereichsweise zu prüfen, ob ein zuvor festgelegter Maximalwert für die Punktdichte überschritten wird, also eine Auflösung an einer Stelle des Scanbereichs vorliegt, die als unnötig hoch betrachtet wird. Beispielsweise wird vom Benutzer eine Auflösung von 20mm bei 10m gewünscht, in einem oder mehreren Bereichen wird aber anhand des Punktdichteindikators eine darüber hinausgehende Auflösung von 5mm bei 10m festgestellt. In diesem Fall, also bei Überschreiten des Maximal- oder Grenzwerts, erfolgt ein Adaptieren der aufgenommenen Punktemenge in Form von Reduzieren der Punktemenge in Bezug auf den entsprechenden Punkt oder Bereich, z.B. durch Mitteln oder Ausdünnen, also Weglassen von Objektpunkten. Die Adaption erfolgt dabei für den gesamten Scanbereich, oder der Scanbereich wird in Einzelbereiche zerlegt bzw. die gesamte aufgenommene Punktemenge wird in Einzelpunktemengen zerlegt, und die Adaption jeweils separat für die Einzelbereiche durchgeführt. Die Anzahl der zu verwerfenden bzw. zu löschenden Punkte wird dabei optional proportional zur Grösse eines jeweiligen Teilbereichs festgelegt. Als weitere Option werden bei der Adaption weitere Kriterien bzw. Parameter berücksichtigt wie beispielsweise die Güte der Messwerte eines jeweiligen Objektpunkts, z.B. sein Signal-Rausch-Verhältnis. Objektpunkte mit einem schlechten Signal-Rausch-Verhältnis werden dabei nicht in die adaptierte Punktemenge mit aufgenommen bzw. Punkte mit einem besonders guten Signal bevorzugt beibehalten.

Als weitere Option erfolgt ein Bestimmen einer Nachbarschaftsmenge, die zueinander benachbarte Objektpunkte repräsentiert. Benachbarte Objektpunkte sind beispielsweise jeweils zwei Objektpunkte mit dem kleinsten Abstand zueinander, oder alle die Objektpunkte, die zu einem Objektpunkt einen Abstand unterhalb einer gewissen Grenze aufweisen oder eine bestimmte Anzahl von Objektpunkten, die zu einem ausgewählten Objektpunkt den geringsten Abstand aufweisen, also beispielsweise die drei Objektpunkte mit den drei kleinsten Abständen.

Basierend auf der Nachbarschaftsmenge werden als weitere Option Objektoberflächen und deren zugehörigen Flächennormalen geschätzt, d.h. eine Art Echtzeitgeometrieerkennung durchgeführt, z.B. indem eine mathematische Ebene durch alle Punkte einer Nachbarschaftsmenge gelegt wird oder durch sonstige Näherungsverfahren. Die Flächennormalen werden optional bei der Ermittlung des Punktdichteindikators herangezogen, beispielsweise indem damit die Ausrichtung der jeweiligen geschätzten Oberfläche zum Messstrahl berechnet wird. Mit dieser ermittelten Ausrichtung werden zusammen mit der Entfernung und der Richtung des Messstrahls die Verteilung auf der Oberfläche, die Abstände der Punkte zueinander und die Punktdichte der Oberfläche vergleichsweise präzise bestimmt, je nach relativer Lage der Oberfläche deutlich genauer als nur unter Verwendung von Entfernung und Winkel zwischen zwei Ausrichtungen des Messstrahls bezüglich zweier benachbarter Objektpunkte. Als Punktdichteindikator wird dann beispielsweise eine geschätzte Punktdichte pro Oberfläche oder eine gemittelte Punktdichte für eine Vielzahl von Oberflächen herangezogen.

In einer Fortbildung des erfindungsgemässen Verfahrens wird ein Informationsgewinnindikator für abgetastete Objektpunkte bestimmt, der den durch den jeweiligen Objektpunkt erhaltenen Zugewinn an Information über die Oberfläche eines jeweiligen Objekts angibt. Mit anderen Worten ist ein solcher Informationsgewinnindikator ein Mass bzw. Abschätzung für einen jeden Objektpunkt oder z.B. eine Nachbarschaftsmenge von Objektpunkten, welchen Informationsgehalt dieser bzw. diese (bei-)trägt. So ist der Informationswert der Objektpunkte einer (ungekrümmten) Ebene relativ gering, da eine Ebene ausreichend genau durch wenige, im Idealfall lediglich drei, Punkte bekannt ist. Dagegen ist der Zugewinn an Information bei einer gekrümmten Oberfläche durch die meisten oder alle erfassten Punkte relativ hoch, da eine beliebig gekrümmte Fläche um so genauer bekannt ist, je mehr Punkte von ihr erfasst sind. Ebenso sind die Punkte an Diskontinuitäten oder Ecken oder Kanten von Objekten für ein Ableiten einer Information über dieses Objekt von grosser Bedeutung und damit mit hohem Informationsgewinnindikator. Der Informationsgewinnindikator wird optional während des Scannens in Echtzeit für bereits abgetastete Objektpunkte ermittelt und wird optional basierend auf den wie oben beschriebenen geschätzten Objektoberflächen ermittelt, insbesondere in Abhängigkeit einer Varianz von Normalabständen von Objektpunkten einer Nachbarschaftsmenge zu der dazu geschätzten Objektoberfläche. Eine grosse Varianz der Normalabstände ist ein Indiz für einen hohen Informationsgewinnindikator, da damit angezeigt wird, dass die aus der Nachbarschaftsmenge geschätzte Oberfläche eine starke Mittelung der Punkte der Nachbarschaft darstellt und somit diese Punkte beispielsweise im Bereich einer Diskontinuität oder Krümmung/Kante liegen.

Die Adaption der aufgenommenen Punktemenge erfolgt als Option zusätzlich in Abhängigkeit des Informationsgewinnindikators, beispielsweise indem solche Punkte, deren Informationsgewinnindikator einen vorbestimmten Schwellenwert überschreitet, als Teil der adaptierten Punktemenge in den permanenten Speicher übertragen werden. Objektpunkte mit einem geringen Informationsgewinnindikator oder einem Informationsgewinnindikator gleich Null werden dagegen zumindest bis auf einige dieser Objektpunkte gelöscht, wodurch die Punktdichte der adaptierten Punktemenge verringert wird, ohne (wesentliche) Information über die Objektoberflächen zu verlieren. Zusätzlich erfolgt die Adaption wie oben beschrieben anhand eines Punktdichteindikators, wobei die Punktdichte in Bereichen mit unerwünscht hoher Punktdichte verringert wird, indem eine festgesetzte Anzahl an Punkten gelöscht wird, und hierbei gezielt Punkte mit einem hohen Informationswert beibehalten werden. Mit Hilfe eines erfindungsgemässen Informationsgewinnindikator kann also die Punktdichte in informationsreichen Teilen des Scanbereichs gezielt hoch gehalten werden, während sie in weniger informationsträchtigen bzw. relevanten Bereichen stark reduziert werden kann, wodurch weniger Daten in den permanenten Speicher übertragen werden müssen. Generell erfolgt optional vor einem Verwerfen von Punkten ein Mitteln oder Interpolieren, wodurch die Information solcher Punkte nicht vollständig verloren geht, sondern in reduzierter Form erhalten bleibt.

In einer Fortbildung des erfindungsgemässen Verfahrens erfolgt zusätzlich eine Auswahl wenigstens eines Bereiches besonderen Interesses (engl.: region of interest) aus dem Scanbereich. Diese Auswahl erfolgt in Abhängigkeit Punktdichteindikators und/oder Informationsgewinnindikators. Dabei wird optional bereichsweise anhand des Punktdichteindikators bzw. des Informationsgewinnindikators geprüft, ob eine vorbestimmte Mindestpunktdichte bzw. eine vorbestimmter Schwellenwert für den Informationsgewinnindikator für den jeweiligen Bereich erzielt bzw. überschritten wird. Damit können beispielsweise Bereiche besonders hoher oder niedriger Punktdichte bzw. Informationsgehalts identifiziert und z.B. dem Benutzer vor Ort auf einem Display des Vermessungssystems angezeigt werden. Dieses ermöglicht z.B. Hinweise auf fehlerhaftes oder unvollständiges Scannen, oder eine Adaption der aufgenommenen Punktemenge dahingehend, dass gezielt die Punktdichte innerhalb eines solchen Bereiches besonderen Interesses adaptiert, insbesondere bei einem Bereich mit auffallend niedriger Punktdichte erhöht wird. Beispielsweise lässt sich somit auch die Punktdichte über den gesamten Scanbereich oder Teilbereiche mit einer gewissen angestrebten Schwankungsbreite angleichen bzw. harmonisieren, indem die Punktdichte an einigen Stellen erhöht und an anderen Stellen entsprechend erniedrigt wird. Auch wird durch die erfindungsgemässe Auswahl von Bereichen besonderen Interesses noch vor Ort ermöglicht, die Punktdichte bzw. die Auflösung bzw. den Detailgrad der Oberflächeninformation durch gezieltes zweites Aufnehmen von Objektpunkten mit einer höheren Auflösung bzw. kleinere Winkelschritte als beim ersten Aufnehmen zu erhöhen. Es erfolgt also in einer Fortbildung des erfindungsgemässen Verfahrens ein zweites Aufnehmen gemäss eines zweiten Scanmusters und zweiten Scanbereichs, wobei der zweite Scanbereich in Abhängigkeit des Bereichs besonderen Interesses (ROI) festgelegt wird, insbesondere mit diesem übereinstimmt, und das zweite Scanmuster engmaschiger ist als das erste Scanmuster. Das zweite Aufnehmen erfolgt dabei optional automatisch. Die dabei aufgenommenen Objektpunkte werden bei der Adaption der (ursprünglich) aufgenommenen Punktemenge berücksichtigt, beispielsweise indem sie zusätzlich oder alternativ zu den zuerst erfassten Objektpunkten des betreffenden Bereichs in die adaptierte Punktemenge eingesetzt werden.

Somit bietet das erfindungsgemässe Verfahren den Vorteil, dass noch vor Ort ein gezieltes Verbessern des Scanresultats ermöglicht ist. Dadurch ist vermeidbar, dass im Scanergebnis Bereiche vorkommen, die von grosser Bedeutung sind, aber deren Punktdichte bzw. Auflösung unterhalb einer vom Benutzer gewünschten Auflösung liegt. Besonders relevante Bereiche, beispielsweise solche, die stark unregelmässige Oberflächen oder viele Übergänge aufweisen, können dank des erfindungsgemässen Verfahrens gezielt hochauflösend bzw. mit höchstmöglicher Auflösung gescannt werden. Dies ist besonders von Vorteil, da ein hochauflösendes Scannen über den gesamten Scanbereich gemäss dem Stand der Technik, also ohne spezielle Auswahl von Bereichen besonderen Interesses, sehr zeitaufwändig ist und unnötig viel Daten produziert. Weiter ist von Vorteil, dass mittels der erfindungsgemässen Bestimmung von Bereichen besonderen Interesses damit auch weniger erfahrene Benutzer gezielt auf besonders relevante Bereiche der Messumgebung hingewiesen respektive bei der Scanaufgabe geleitet werden können bzw. bei einem vollautomatischen Adaptieren der Punktemenge Schwachstellen bzw. verbesserungswürdige Bereiche der Punktemenge automatisch eliminiert werden und somit das Scanergebnis automatisch optimiert wird.

Generell bietet das erfindungsgemässe Verfahren den Vorteil, dass es damit ermöglicht ist, die zu speichernde Punktemenge noch vor Ort, sozusagen "on the fly", zu optimieren. Insbesondere wird unnötiger Datenballast gleich eliminiert, indem nur solche Punkte bzw. Daten dauerhaft aufgezeichnet werden, die für den Benutzer tatsächlich von Relevanz sind bzw. zumindest das Ausmass an nicht oder wenig relevanten Punkten bzw. Daten im Vergleich zu bekannten Verfahren drastisch eingeschränkt. Z.B. lassen sich überhöhte Punktdichten im Bodenbereich des Laserscanners vermeiden, indem die Punktdichte durch Löschen vieler Bodenpunkte massiv ausgedünnt wird. Somit wird der Bedarf an Festspeicher bzw. die Anforderungen an die Hardware und Übertragungskapazität bzw. Übertragungszeit von vorneherein verringert, wohingegen mit Verfahren nach dem Stand der Technik eine Datenreduktion erst mittels post-processing, d.h. im Nachhinein möglich ist. Mit dem erfindungsgemässen Verfahren ist ein kostengünstigeres und effizienteres Erledigen von Scanaufgaben bzw. der Weiterverarbeitung der dabei gewonnenen Daten ermöglicht.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des erfindungsgemässen Verfahrens.

Die vorliegende Erfindung betrifft ausserdem ein Vermessungssystem mit Scanfunktionalität, insbesondere ein Laserscanner oder eine Totalstation. Das Vermessungssystem weist eine Steuer- und Auswerteeinheit auf. Dabei ist erfindungsgemäss die Steuer- und Auswerteeinheit zur Ausführung des erfindungsgemässen Scanverfahrens ausgebildet.

Das erfindungsgemässe Verfahren und die erfindungsgemässe Vorrichtung werden nachfolgend anhand von den in den Zeichnungen schematisch dargestellten Ausführungen und Anwendungsvorgängen näher beschrieben.

Im Einzelnen zeigen
- Fig. 1: eine Seitenansicht eines Vermessungssystems mit Scanobjekten,
- Fig. 2: schematisch ein erstes Beispiel für das erfindungsgemässe Scanverfahren,
- Fig. 3a,b: schematisch ein Beispiel für die Ermittlung eines Punktdichteindikators,
- Fig. 4a-c: schematisch ein Beispiel für die Ermittlung einer Objektflächennormalen,
- Fig. 5a,b: schematisch ein Beispiel für die Ermittlung eines Informationsgewinnindikators,
- Fig. 6: schematisch ein zweites Beispiel für das erfindungsgemässe Scanverfahren,
- Fig. 7: schematisch ein Beispiel für eine Fortbildung des erfindungsgemässen Scanverfahrens.

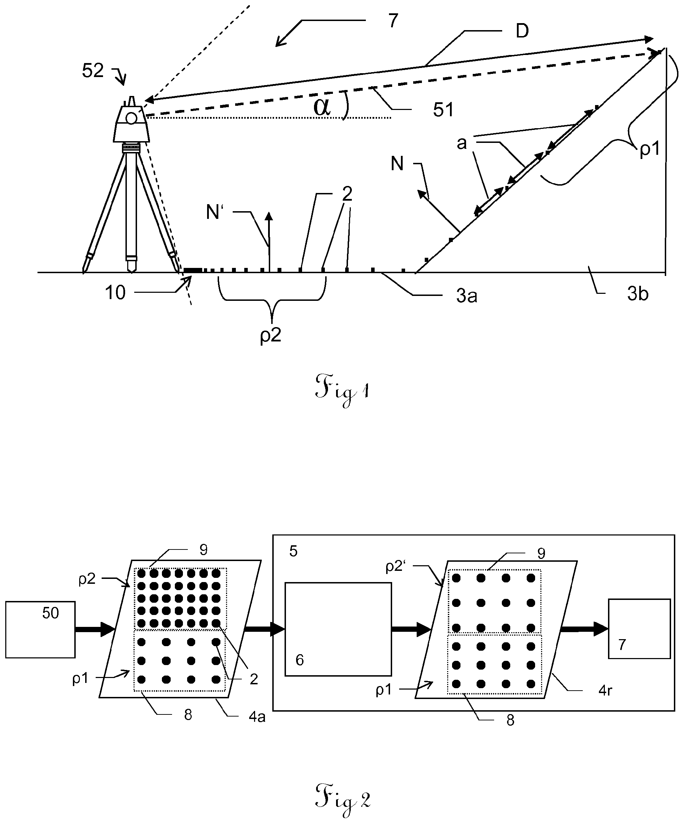

Figur 1 zeigt in einer Seitenansicht ein Vermessungssystem 52, beispielsweise ausgebildet als automatisierte Totalstation oder als Laserscanner mit einer Steuer- und Auswerteeinheit. Das Vermessungssystem 52 tastet Objekte 3a, 3b seiner Messumgebung innerhalb eines festgelegten Scanbereichs 7 mittels eines Messstrahls 51, z.B. ein Laserstrahl, ab, dessen Aus- bzw. Zielrichtung fortlaufend gemäss eines ersten bekannten Scanmusters geändert wird. Damit werden einzelne Objektpunkte 2 erfasst, wobei die jeweilige Entfernung D zum Objektpunkt und die jeweilige Ausrichtung des Messstrahls 51 in Bezug auf zwei Messachsen bzw. zwei Winkel bestimmt werden. Der Scanvorgang ergibt damit eine Punktemenge, die eine dreidimensionale Information über die Oberfläche der gescannten Objekte 3a, 3b enthält. Der Einfachheit halber ist die Darstellung der Fig. 1 jedoch nur zweidimensional, so dass eine lineare Anordnung von gescannten Objektpunkten 2 anstelle der tatsächlichen flächenhaften Verteilung und nur der Elevationswinkel α als einer der beiden Ausrichtungswinkel eingezeichnet sind.

Die fortlaufende Änderung der Ausrichtung des Messstrahls 51 erfolgt bei Vermessungssystemen 52 des Stands der Technik gleichschrittig, wobei die Schrittweite z.B. vom Benutzer (innerhalb gewisser Grenzen) vorgebbar ist, beispielsweise indem er eine gewünschte Punktdichte ρ festlegt, z.B. dass eine räumliche Auflösung, d.h. ein Abstand a der Scanpunkte 2 zueinander, von 1cm auf einer Entfernung von 30m erzielt werden soll. Aus diesen Vorgaben leitet die Steuer- und Auswerteeinheit die erforderlichen Winkelschrittweiten ab.

Nun ist es aufgrund der realen Messbedingungen so, dass bei gleichmässigen Veränderungen z.B. des Elevationswinkel α der Abstand a der Objektpunkte zueinander abhängig ist von der Entfernung D zwischen Vermessungsgerät 52 und dem Objekt 3a, 3b und von der Ausrichtung des Objekts 3a, 3b zum Vermessungsgerät 52 bzw. Messstrahl 51. So vergrössert sich der Abstand a der Objektpunkte in der in Fig.1 dargestellten Konfiguration zunehmend mit der Entfernung D. Die tatsächlich erzielte Punktdichte ρ1, ρ2 variiert also mit der Entfernung D und der Ausrichtung der jeweiligen Flächennormalen N, N' einer Objektoberfläche zum Messstrahl 51. So liegen in zwei beispielhaften Teilbereichen des Scanbereichs 7 eine (relativ) hohe (gemittelte) Punktdichte ρ2 im Nahbereich beim Nadir des Vermessungssystems 52 und eine (relativ) geringe (gemittelte) Punktdichte ρ1 im Fernbereich vor.

Eine relativ grosse Punktdichten ρ2 und damit relativ hohe Auflösung wird bezüglich des Objekts 3a erzielt, welches der Boden ist, auf dem das Vermessungssystem 52 steht. Gerade solche Bodenbereiche des Scanbereichs 7 sind i.A. jedoch der für die Messaufgabe am wenigsten relevant, so dass die dadurch gewonnen Daten bzw. Teile der aufgenommenen Punktemenge zumindest teilweise unnötigen Datenballast darstellen. Hingegen kann die eingestellte gewünschte Auflösung für weiter entfernte, jedoch relevante Objekte (z.B. weiter hinten liegende Teile von Objekt 3b) zu gering sein, so dass diese nicht mit einem ausreichenden Detailgrad gescannt werden. Dies könnte nur dadurch vermieden werden, dass von vorneherein eine hohe bzw. höhere Auflösung eingestellt wird, was jedoch wie dargelegt den Datenballast im Nahbereich weiter aufbläht. Dabei kann es je nach vorgegebener Messeinstellung sogar vorkommen, dass die Punktabstände a im absoluten Nahbereich 10 am Standort des Laserscanners kleiner sind als der Durchmesser des Messstrahls 51, wodurch die dadurch erzeugten Daten bzw. Punkte zusätzlich überflüssig weil redundant sind. Scanverfahren nach dem Stand der Technik erlauben nachteilig nicht, solchen Datenballast unmittelbar "abzuwerfen", sondern die ungewünschten Punkte bzw. Daten werden wie alle anderen auf einem permanenten Speicher dauerhaft abgelegt und ggf. erst nach Abschluss des Scanvorgangs in einem post-processing getilgt. Mit anderen Worten wird im Stand der Technik die aufgenommene Punktemenge vollständig auf einen Festspeicher übertragen.

Fig. 2 zeigt schematisch das erfindungsgemässe Scanverfahren. Von einem Scanmodul 50 des Vermessungsgeräts gelangt die durch das oben dargestellte Abtasten von Objekten mittels des Messstrahls gewonnene aufgenommene Punktemenge 4a in einen flüchtigen Speicher 6 der Steuer- und Auswerteeinheit 5 des Vermessungssystems. Die aufgenommene Punktemenge 4a enthält im Beispiel einen ersten Bereich 8 mit einer relativ geringen Punktdichte ρ1 und einen zweiten Bereich 9 mit einer relativ hohen Punktdichte ρ2. Die hohe Punktdichte ρ2 wird im Gegensatz zur geringen Punktdichte ρ1 im Beispiel als zu hoch angesehen, z.B. weil sie zum Bereich des Bodens um den Laserscanner gehört oder grösser ist als eine zuvor festgelegte Sollpunkdichte bzw. als ein zuvor festgelegter Maximalwert für die Punktdichte.

Deshalb wird die aufgenommene Punktemenge in Abhängigkeit der Punktdichte adaptiert, indem die Punktdichte ρ2 des zweiten Bereichs 9 zu einer niedrigeren Punktdichte ρ2' verringert wird. Im Beispiel erfolgt das Verringern durch ein Ausdünnen der Punktemenge im zweiten Bereich 9, indem jeder zweite Objekt- bzw. Scanpunkt 2 weggelassen wird. Alternativ kann ein Verringern der Punktdichte durch Mitteln oder abhängig vom ermittelten Abstand der Objektpunkte 2 zueinander erfolgen. Durch die Adaption wird eine adaptierte Punktemenge 4r erzeugt. Im Beispiel weist die adaptierte Punktemenge 4r gegenüber der aufgenommenen Punktemenge 4a eine insgesamt geringere Punktdichte auf, wobei die Adaption zudem derart erfolgt ist, dass alle Bereiche 8, 9 eine gleiche Punktdichte aufweisen: ρ2'=ρ1.

Die adaptierte Punktemenge 4r wird in einem permanenten Speicher 7 abgelegt, welcher im Beispiel ebenfalls Teil der Steuer- und Auswerteeinheit 5 ist. Die aufgenommene Punktemenge 4a hingegen findet keinen Eingang in den permanenten Speicher 7, wodurch diese nach Abschluss der Adaption bzw. des Scanvorgangs endgültig verloren geht, da sie nur im vorläufigen Zwischenspeicher 6 und damit temporär gespeichert ist. Die im Beispiel dargestellte Adaption stellt eine Reduktion der aufgenommenen Punktemenge dar, wodurch die adaptierte Punktemenge vorteilhaft weniger Speicherplatz im Festspeicher 7 benötigt als die aufgenommene Punktemenge 4a benötigen würde.

Das Adaptieren in Abhängigkeit einer Punktdichte erfolgt als Option in Abhängigkeit eines Punktdichteindikators. Der Punktdichteindikator stellt ein Mass für die Punktdichte einer gewissen Stelle bzw. Bereichs der aufgenommenen Punktemenge dar.

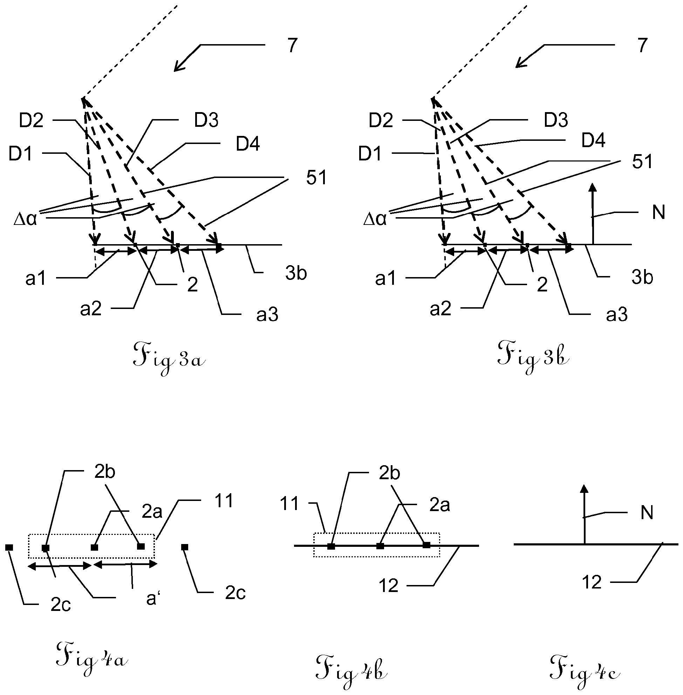

Die Figuren 3a und 3b zeigen Beispiele für einen erfindungsgemässen Punktdichteindikator und dessen Ermittlung. In Fig. 3a wird für jeden einzelnen Objektpunkt 2 des Objekts 3b der Abstand a1-a4 zu seinem nächsten Nachbarn geschätzt, indem ein Verhältnis der Winkeldifferenz bzw. Winkelschrittweite Δα des Elevationswinkels α, mit dem der Messstrahl 51 emittiert wird, zur jeweiligen Entfernung D1-D4 gebildet wird. Dieser geschätzte Abstand a1-a4 dient dann als Punktdichteindikator. Statt nur den Abstand a1-a4 zu seinem nächsten Nachbarn heranzuziehen, dienen alternativ die Abstände zu einer festgelegten Anzahl von nächsten Nachbarn und/oder den nächsten Nachbarn eines Objektpunktes innerhalb eines definierten Umkreises. Als weitere Alternative kann ein Punktdichteindikator statt für einzelne Objektpunkte 2 auch bereichsweise für definierte Einzelbereiche des Scanbereichs 7 oder eine definierte Anzahl von Objektpunkten 2 ermittelt werden.

Fig. 3b zeigt eine verbesserte Variante einer erfindungsgemässen Ermittlung eines Punktdichteindikators. Im Vergleich zur Vorgehensweise nach Fig. 3a wird zusätzlich die Ausrichtung der Oberfläche des Objekts 3b bzw. seiner Flächennormalen N relativ zur Ausrichtung des Messstrahls 51 wie nachfolgend zu den Fig. 4a-c beschrieben bestimmt und zur Ermittlung des Punktdichteindikators herangezogen. Durch Berücksichtigung der relativen Ausrichtung von Oberfläche bzw. deren Flächennormalen N zur Messstrahlrichtung wird ein jeweiliger Punktabstand a1-a4 genauer bestimmt als mit der Methode nach Fig. 3a. Dadurch liegt ein Punktdichteindikator höherer Güte vor, anhand dessen die Adaption exakter bzw. passgenauer vorgenommen werden kann.

Fig. 4a bis Fig. 4c zeigen ein Beispiel für die Ermittlung einer Flächennormalen N anhand der erfassten Objektpunkte basierend auf einer Nachbarschaftsmenge. Wie in den vorherigen Beispielen ist die Darstellung eine vereinfachende zweidimensionale Seitenansicht. Für einen jeweiligen Objektpunkt 2a wird eine Nachbarschaftsmenge 11 bestimmt, die zum Objektpunkt 2a benachbarte Objektpunkte repräsentiert (Fig. 4a). Im Beispiel werden diejenigen Objektpunkte 2b als zur Nachbarschaftsmenge 11 gehörig angesehen, deren Abstand a zum Objektpunkt 2a kleiner ist als ein vorgegebener Maximalabstand a'. Entsprechend gehören im Beispiel die Objektpunkte 2c nicht zur Nachbarschaftsmenge 11, da ihr Abstand zum Objektpunkt 2a grösser ist als der Maximalabstand a'. Alternativ wird eine Nachbarschaftsmenge 11 anhand anderer Kriterien definiert, z.B. als Menge definierter Mächtigkeit der Punkte mit der kleinsten euklidischen Distanz zum Objektpunkt 2a.

Basierend auf der Nachbarschaftsmenge 11 der benachbarten Objektpunkte 2a und 2b wird anschliessend eine Oberfläche bzw. Ebene 12 geschätzt (Fig. 4b). Die Flächenermittlung erfolgt beispielsweise durch Fitten einer Ebene 12 anhand der Objektpunkte 2a und 2b mit dem Fachmann bekannten mathematischen Methoden. Schliesslich wird die Flächennormale N der Ebene 12 berechnet (Fig. 4c). Falls das Schätzen der Oberfläche nicht über Bestimmen einer mathematisch exakten Ebene erfolgt, sondern über eine anderweitige Modellierung erfolgt, ist die Flächennormale N beispielsweise ein Mittelwert aus mehreren Einzelflächennormalen.

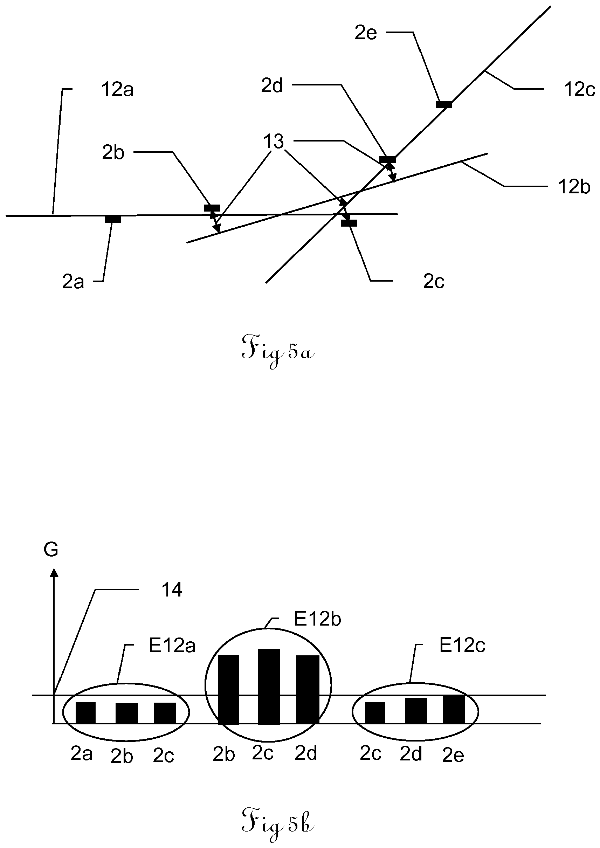

Die Fig. 5a und 5b zeigen eine Fortbildung des erfindungsgemässen Verfahrens. Die Relevanz der einzelnen abgetasteten Objektpunkte für die gesuchte Information über die Objektoberflächen ist unterschiedlich. Da z.B. für die eindeutige Festlegung einer Ebene drei Punkte, die nicht auf einer Geraden liegen, ausreichend ist, sind im Beispiel nach Fig. 4a zwei (bezogen auf die Zweidimensionalität der Darstellung von Fig. 4a) der Scanpunkte 2a-2c ausreichend. Die restlichen der Objektpunkte 2a-2c bringen keinen Zugewinn an Information über die Oberfläche 12 (siehe Fig. 4b). Deshalb wird optional ein Informationsgewinnindikator bestimmt, der die Relevanz der einzelnen Objektpunkte oder Mengen bzw. Gruppen von Objektpunkten ausdrückt.

In Fig. 5a sind fünf Objektpunkte 2a-2e dargestellt, wobei diese im Unterschied zu den Fig. 4a-4c nicht alle entlang einer Geraden liegen, sondern verteilt sind. Deshalb ergeben sich nach dem zu den Fig. 4a-4c beschriebenen Vorgehen drei geschätzte Oberflächen 12a-12c. Anschliessend wird der (Normal-)Abstand der jeweiligen Punkte 2a-2e zu den Ebenen 12a-12c bestimmt, zu denen sie zugehörig sind. Da der Objektpunkt 2c an einer Kante liegt, haben er und die Nachbarschaftspunkte 2b und 2d einen Normalabstand 13, der relativ gross ist. Hingegen weisen die Objektpunkte 2a-2c einen geringen Normalabstand bzw. im Idealfall keinen Abstand (deshalb ist dieser nicht eingezeichnet) zur Oberfläche 12a auf, da der Objektpunkt 2b "mitten" in der Oberfläche 12a liegt. Entsprechend gilt dies für die Ebene 12c und die zugehörigen zueinander benachbarten Objektpunkte 2c-2e.

Die Fig. 5b zeigt schematisch den jeweiligen Informationsgewinnindikator G an. Bezogen auf die Ebene 12b aus Fig. 5a haben die Punkte 2b-2d einen vergleichsweise hohen Informationsgewinnindikator G. Dahingegen ist der jeweilige Informationsgewinnindikator G der Punkte 2a-2c bezogen auf die Ebene 12a und der Punkte 2c-2e bezogen auf die Ebene 12c relativ gering bzw. bezogen auf einen Mindestwert bzw. Schwellwert 14, der sich z.B. aus dem Signal-Rausch-Verhältnis ableitet, vernachlässigbar. Der jeweilige Informationsgewinnindikator G ist dabei entweder z.B. unmittelbar aus dem jeweiligen Normalabstand abgeleitet oder unter Berücksichtigung einer Varianz der Normalabstände der zu einer jeweiligen Oberfläche gehörigen Objektpunkte.

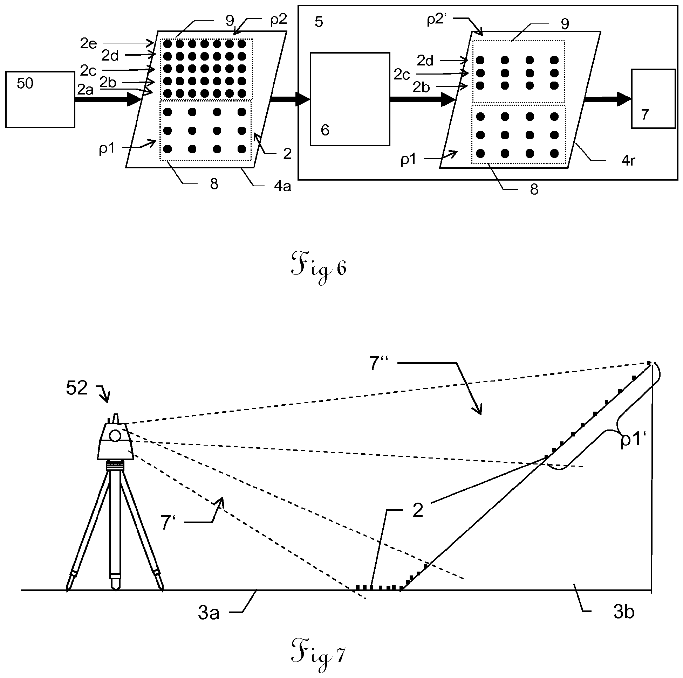

Fig. 6 zeigt ein Beispiel, in dem der nach den Fig. 5a und 5b ermittelte Informationsgewinnindikator G bei der Adaption der aufgenommenen Punktemenge 4a berücksichtigt wird. Die Fig. 6 ist analog der Fig. 2. Die Objektpunkte des zweiten Bereichs 9 sind dabei den Objektpunkten 2a-2e der Fig. 5a zugeordnet, wobei jede Zeile des Bereichs einer Wiederholung des jeweiligen Objektpunkts, z.B. 2a, in die Zeichenebene der Fig. 5a entspricht. D.h. die Zeilen der Objektpunkte 2c-2e sind der Oberfläche 12c aus Fig. 5a zugehörig, die Zeilen der Objektpunkte 2a-2c der Oberfläche 12a zugehörig und die Zeile der Punkte 2c entspricht der Kante zwischen beiden Oberflächen. Die Scanpunkte 2 des ersten Bereichs 8 werden im Beispiel als ebenfalls der Oberfläche 12a zugehörig betrachtet.

In Abwandlung der Adaption der aufgenommenen Punktemenge 4a nach Fig. 2 erfolgt diese nun auch in Abhängigkeit des Informationsgewinnindikators. Da wie zu den Fig. 5a und 5b beschrieben der Informationsgewinnindikator der Punkte 2a und 2e überall gering bzw. gleich Null ist, werden alle diese Punkte im Unterschied zur Methode nach Fig. 2 nicht in die adaptierte Punktemenge 4r übernommen. Die Scanpunkte 2b-2d weisen (zumindest in Bezug auf wenigstens eine Oberfläche) einen hohen Informationsgewinnindikator auf, weswegen diese Punkte in die adaptierte Punktemenge 4r aufgenommen werden. Als Option erfolgt dabei wie in Fig. 6 dargestellt zusätzlich auch ein Ausdünnen innerhalb der Punkte mit hohem Informationsgewinnindikator, indem jede zweite Spalte gelöscht wird, da die Abstände der jeweiligen Punkte 2b-2d zueinander in jeder Zeile bzw. die Punktdichte entlang einer jeweiligen Zeile der aufgenommenen Punktemenge einen festgelegten Maximalwert überschreiten. Dabei kann optional z.B. die Schwankung des Informationsgewinnindikators zwischen Nachbarpunkten einer Zeile berücksichtigt werden, indem bei einer grossen Schwankung alle diese Nachbarpunkte beibehalten werden. Alternativ werden alle Scanpunkte 2b-2d mit hohem Informationsgewinnindikator auf jeden Fall und unabhängig von sonstigen Selektionskriterien in die adaptierte Punktemenge aufgenommen, um keinerlei Verlust von relevanten Objektpunkten zu erhalten.

Da im Beispiel angenommen wird, dass alle Punkte 2 des ersten Teilbereichs 8 zur Ebene 12a aus Fig. 5a gehörig sind, werden in einer nicht dargestellten Alternative auch Punkte 2 des ersten Teilbereichs 8 aussortiert, da diese generell einen geringen Informationsgewinnindikator aufweisen bzw. der erste Bereich insgesamt einen geringen (mittleren) Informationsgewinnindikator aufweist. Z.B. erfolgt dann ein striktes spalten- und/oder zeilenweises Löschen von Objektpunkten 2 oder es werden nur die Punkte 2 mit einem sehr guten Signal-Rausch-Verhältnis, also die "qualitativ hochwertigsten" Punkte, beibehalten und die adaptierte Punktemenge 4r aufgenommen. Weiter kann die Anzahl der zu verwerfenden Punkte proportional zur Grösse eines jeweiligen Teilbereichs 8, 9 bzw. eine feste Anzahl an Punkten pro geschätzter Objektoberfläche beibehalten werden.

Wie dargelegt erfolgt also die Reduktion der Punktdichte p2 dergestalt, dass gezielt Objektpunkte geringer Relevanz aussortiert werden bzw. gezielt Punkte mit hohem Informationsgehalt selektiert und Teil der adaptierten Punktemenge werden.

Anhand Fig. 7 wird eine Fortbildung des erfindungsgemässen Verfahrens beschrieben, bei der eine Auswahl eines Bereiches 7', 7" besonderen Interesses in Abhängigkeit des Punktdichteindikators und/oder des Informationsgewinnindikators erfolgt. Die Auswahl erfolgt z.B. dahingehend, ob an einer Stelle oder einem Teilbereich des Scanbereichs eine bestimmte Mindestpunktdichte vorliegt oder dahingehend, ob der Informationsgewinnindikator einer Stelle oder eines Teilbereich einen vorbestimmten Schwellenwert überschreitet. Mit anderen Worten wird nach Stellen bzw. Bereichen mit Punktdichten gesucht, die nicht eine definierte Sollpunktdichte erreichen und/oder Stellen bzw. Bereichen mit besonderes hohem Informationsgewinnindikator und damit hoher Relevanz wie z.B. Kanten oder gewölbten Oberflächen. Die Auswahl erfolgt als Teil des erfindungsgemässen Scanverfahrens, so dass derart gefundene Bereiche besonderen Interesses 7', 7" dann z.B. noch vor Ort bzw. noch während des Scans für bereits erfasste Teilbereiche bzw. Objekte einem Benutzer auf einem Display des Vermessungssystems angezeigt werden können, wodurch der Benutzer noch vor Ort besonders relevante Zonen oder Zonen mit ungenügender Scanauflösung erkennen kann.

Für solche Bereiche wird als weitere Fortbildung die aufgenommene Punktemenge adaptiert, indem die Punktemenge erhöht wird. Dies erfolgt z.B., indem durch den Benutzer oder automatisch ein zweites Aufnehmen zusätzlicher bzw. weiterer Objektpunkte 2 innerhalb des jeweiligen Bereichs besonderen Interesses 7', 7" erfolgt. Z.B. wird wie in Fig. 7 dargestellt der Bereich 7' um die Grenze der beiden Objekte 3a, 3b erneut gescannt, da ein solcher Grenzbereich von besonderer Bedeutung für die Scanaufgabe ist. Als weiterer Bereich 7" wird der Fernbereich auf dem Objekt 3b aufgenommen, da dieser Bereich beim ersten Aufnehmen aufgrund der relativ grossen Entfernung und Schräge des Objekts 3b mit nur relativ geringer Auflösung erfasst wurde. Die jeweiligen Bereich 7', 7" werden mit einem zweiten Scanmuster aufgenommen, das im Vergleich zum ersten Scanmuster des ersten Aufnehmens engmaschiger ist. Mit anderen Worten wird das zweite Aufnehmen mit einer kleineren Winkelschrittweite als beim ersten Mal durchgeführt. Dementsprechend ergibt sich für diese Teilbereiche 7', 7" eine erhöhte Punktdichte im Vergleich zur Punktdichte der beim ersten Mal aufgenommenen Punktemenge in diesen Bereichen 7', 7" (vgl. Fig. 1; so z.B. ρ1'> ρ1). Für diese Bereiche besonderen Interesses 7', 7" erfolgt dann eine Adaption der (ursprünglich) aufgenommenen Punktemenge, indem die beim zweiten Aufnehmen gewonnenen Punkte in die aufgenommene Punktemenge eingefügt werden. Alternativ erfolgt ein weiteres Adaptieren der bereits durch ein erstes Adaptieren adaptierten Punktmenge. Dabei werden die neuen Punkte zusätzlich oder alternativ zu den ursprünglichen Punkten verwendet. Als Alternative für ein zweites Aufnehmen ist für den Bereich 7" denkbar, die Auflösung durch entsprechende Algorithmen "künstlich" zu erhöhen. Diese Vorgehensweise ist jedoch für Bereiche 7' mit Diskontinuitäten weniger geeignet. Als weitere Alternative oder weiterer Zusatz können bei der Auswahl eine Region besonderen Interesses auch weitere Kriterien berücksichtigt werden, wie z.B. das Signal-Rauschverhältnis der aufgenommene Objektpunkte oder die Art des gescannten Objekts 3a, 3b.

In dieser erfindungsgemässen Fortbildung erfolgt also eine Erzeugung einer adaptierten Punktemenge (zusätzlich oder alternativ zu den vorgenannten Adaptionsmethoden), indem gezielt die Punktdichte und damit die Auflösung besonders relevanter oder unzureichend erfasster Bereiche verbessert wird. Dadurch, dass die erfindungsgemässe Adaption Teil des Scanvorgangs ist, und sozusagen in Echtzeit erfolgt, ist es ermöglicht, noch vor Ort Schwachstellen eines Scans zu eliminieren und/oder wesentliche und gezielte Erhöhungen des Detailgrads zu erreichen, ohne unnötigen Datenballast in Kauf zu nehmen.

## Patentansprüche

1. Scanverfahren zum Ableiten einer Information über Oberflächen von Objekten für ein eine Steuer- und Auswerteeinheit aufweisendes Vermessungssystem mit Scanfunktionalität, insbesondere einen Laserscanner oder eine Totalstation, wobei mittels eines Scanvorgangs ein erstes Aufnehmen einer Punktemenge aus mittels eines Messstrahls des Vermessungsgeräts erfassten Objektpunkten erfolgt, indem
• durch fortlaufendes Ausrichtungsändern des Messstrahls gemäss eines bekannten ersten Scanmusters und (ersten) Scanbereichs Objekte abgetastet werden,
• die jeweilige Entfernung zum Objektpunkt und die jeweilige Ausrichtung der für eine Entfernungsmessung emittierten Messstrahlung bestimmt werden,
**dadurch gekennzeichnet, dass**
die aufgenommene Punktemenge der erfassten Objektpunkte in einem flüchtigen Speicher der Steuer- und Auswerteeinheit vorgehalten wird und vor einem Ablegen in einem permanenten Speicher durch die Steuer- und Auswerteeinheit als Teil des Scanvorgangs eine Adaption, insbesondere eine Reduktion, der aufgenommenen Punktemenge in Abhängigkeit wenigstens einer Punktdichte der aufgenommenen Punktemenge erfolgt, wodurch eine adaptierte, insbesondere reduzierte, Punktemenge erzeugt wird, und, bei endgültigem Verlust der aufgenommenen Punktemenge, lediglich die adaptierte Punktemenge im permanenten Speicher abgelegt wird, wobei ein Ermitteln wenigstens eines Punktdichteindikators für die aufgenommene Punktemenge anhand der bestimmten Entfernungen und Ausrichtungen erfolgt und die Adaption in Abhängigkeit des Punktdichteindikators erfolgt.

2. Verfahren nach Anspruch 1,
**dadurch gekennzeichnet, dass**
die Adaption erfolgt, indem innerhalb wenigstens eines vorbestimmten Teilbereichs des Scanbereichs gemäss vorbestimmter Auswahlkriterien die Punktdichte selbst adaptiert, insbesondere durch Ausdünnen und/oder Mitteln reduziert, wird.

3. Verfahren nach Anspruch 1 oder 2,
**dadurch gekennzeichnet, dass**
• das Ermitteln des Punktdichteindikators während des Scanvorgangs in Echtzeit in Bezug auf bereits erfasste Objektpunkte erfolgt und/oder
• der Punktdichteindikator auf geschätzten räumlichen Abständen von erfassten Objektpunkten basiert.

4. Verfahren nach einem der vorherigen Ansprüche,
**dadurch gekennzeichnet, dass**
im Rahmen des Ermittelns des Punktdichteindikators ein Bestimmen einer Nachbarschaftsmenge erfolgt, die benachbarte Objektpunkte repräsentiert.

5. Verfahren nach Anspruch 4,
**dadurch gekennzeichnet, dass**
basierend auf der Nachbarschaftsmenge Objektoberflächen und zugehörige Flächennormalen geschätzt werden und die Flächennormalen zum Ermitteln des Punktdichteindikators herangezogen werden.

6. Verfahren nach einem der vorherigen Ansprüche,
**dadurch gekennzeichnet, dass**
ein Informationsgewinnindikator für abgetastete Objektpunkte bestimmt wird, der den durch den jeweiligen Objektpunkt erhaltenen Zugewinn an Information über die Oberfläche eines jeweiligen Objekts angibt, insbesondere wobei
• die Adaption zusätzlich in Abhängigkeit des Informationsgewinnindikators eines jeweiligen abgetasteten Objektpunkts erfolgt, wobei im Speziellen Objektpunkte, deren Informationsgewinnindikator einen vorbestimmten Schwellenwert überschreitet, als Teil der adaptierten Punktemenge in den permanenten Speicher übertragen werden, und/oder
• das Ermitteln des Informationsgewinnindikators während des Scannens in Echtzeit für bereits abgetastete Objektpunkte erfolgt.

7. Verfahren nach Anspruch 5 und 6,
**dadurch gekennzeichnet, dass**
der Informationsgewinnindikator basierend auf den geschätzten Objektoberflächen bestimmt wird, insbesondere in Abhängigkeit einer Varianz von Normalabständen von Objektpunkten einer Nachbarschaftsmenge zu der dazu geschätzten Objektoberfläche.

8. Verfahren nach Anspruch 3 oder einem der vorherigen auf Anspruch 3 rückbezogenen Ansprüche,
**dadurch gekennzeichnet, dass**
die Adaption dergestalt erfolgt, dass anhand des Punktdichteindikators punkt- oder bereichsweise geprüft wird, ob ein zuvor festgelegter Maximalwert für die Punktdichte überschritten wird und bei Überschreiten des Maximalwerts die Punktdichte, insbesondere mittels Ausdünnen oder Mitteln, in Bezug auf den entsprechenden Punkt oder Bereich reduziert wird.

9. Verfahren nach Anspruch 3 oder einem der vorherigen auf Anspruch 3 rückbezogenen Ansprüche,
**dadurch gekennzeichnet, dass**
eine Auswahl wenigstens eines Bereiches besonderen Interesses (ROI) aus dem Scanbereich in Abhängigkeit des Punktdichteindikators erfolgt, insbesondere wobei im Rahmen der Auswahl anhand des Punktdichteindikators punkt- oder bereichsweise geprüft wird, ob eine vorbestimmte Mindestpunktdichte vorliegt.

10. Verfahren nach Anspruch 6 oder einem der vorherigen auf Anspruch 6 rückbezogenen Ansprüche,
**dadurch gekennzeichnet, dass**
eine Auswahl wenigstens eines Bereiches besonderen Interesses (ROI) aus dem Scanbereich in Abhängigkeit des Informationsgewinnindikators erfolgt, insbesondere wobei im Rahmen der Auswahl anhand des Informationsgewinnindikators punkt- oder bereichsweise geprüft wird, ob der jeweilige Informationsgewinnindikator einen vorbestimmten Schwellenwert überschreitet.

11. Verfahren nach Anspruch 9 oder 10,
**dadurch gekennzeichnet, dass**
für den Bereich besonderen Interesses (ROI) die aufgenommene Punktemenge zusätzlich adaptiert wird, indem die Punktdichte innerhalb des Bereichs besonderen Interesses (ROI) erhöht wird.

12. Verfahren nach einem der Ansprüche 9 bis 11,
**dadurch gekennzeichnet, dass**
ein zweites, insbesondere automatisches, Aufnehmen gemäss eines zweiten Scanmusters und zweiten Scanbereichs erfolgt, wobei
• der zweite Scanbereich in Abhängigkeit des Bereichs besonderen Interesses (ROI) festgelegt wird, insbesondere mit diesem übereinstimmt,
• das zweite Scanmuster engmaschiger ist als das erste Scanmuster und
• die dabei aufgenommenen Objektpunkte bei der Adaption der aufgenommenen Punktemenge berücksichtigt werden.

13. Verfahren nach einem der vorherigen Ansprüche,
**dadurch gekennzeichnet, dass**
• der Scanbereich in Einzelbereiche zerlegt wird und die Adaption jeweils für die Einzelbereiche separat erfolgt und/oder
• bei der Adaption die Güte der Messwerte eines jeweiligen Objektpunkts, insbesondere das Signal-Rausch-Verhältnis der bestimmten Entfernung, berücksichtigt wird.

14. Computerprogrammprodukt, das auf einem maschinenlesbaren Träger gespeichert ist, oder Computer-Datensignal, verkörpert durch eine elektromagnetische Welle, mit Programmcode, der geeignet ist zur Durchführung des Verfahrens nach einem der Ansprüche 1 bis 13.

15. Vermessungssystem mit Scanfunktionalität, insbesondere ein Laserscanner oder eine Totalstation, wobei das Vermessungssystem eine Steuer- und Auswerteeinheit aufweist,
**dadurch gekennzeichnet, dass**
die Steuer- und Auswerteeinheit zur Ausführung des Scanverfahrens nach Anspruch 1 ausgebildet ist.

## Claims

1. Scanning method for deriving information about surfaces of objects for a surveying system, in particular a laser scanner or a total station, with scanning functionality comprising a control and evaluation unit, wherein a first recording of a point set composed of object points detected by means of a measurement beam of the surveying apparatus is effected by means of a scanning process by
• scanning objects by continuously changing the alignment of the measurement beam in accordance with a known first scanning pattern and (first) scanning region,
• determining the respective distance to the object point and the respective alignment of the measurement radiation emitted for a distance measurement,
**characterized in that**
the recorded point set of the detected object points is kept available in a volatile memory of the control and evaluation unit and prior to storage in a permanent memory by means of the control and evaluation unit as part of the scanning process an adaptation, in particular a reduction, of the recorded point set is effected depending on at least one point density of the recorded point set, as a result of which an adapted, in particular reduced, point set is generated, and, along with final loss of the recorded point set, only the adapted point set is stored in the permanent memory, wherein ascertaining at least one point density indicator for the recorded point set is effected on the basis of the determined distances and alignments and the adaptation is effected depending on the point density indicator.

2. Method according to Claim 1,
**characterized in that**
the adaptation is effected by the point density itself being adapted, in particular reduced by thinning out and/or averaging, within at least one predetermined partial region of the scanning region in accordance with predetermined selection criteria.

3. Method according to Claim 1 or 2,
**characterized in that**
• ascertaining the point density indicator is effected during the scanning process in real time in relation to object points already detected and/or
• the point density indicator is based on estimated spatial distances of detected object points.

4. Method according to any one of the preceding claims,
**characterized in that**
determining a neighborhood set representing neighboring object points is effected in the context of ascertaining the point density indicator.

5. Method according to Claim 4,
**characterized in that**
on the basis of the neighborhood set object surfaces and associated surface normals are estimated and the surface normals are used for ascertaining the point density indicator.

6. Method according to any one of the preceding claims,
**characterized in that**
an information gain indicator for scanned object points is determined, which indicates the gain in information about the surface of a respective object that is obtained by means of the respective object point, in particular wherein
• the adaptation is effected depending on the information gain indicator of a respective scanned object point, wherein specifically object points whose information gain indicator exceeds a predetermined threshold value are transferred as part of the adapted point set into the permanent memory, and/or
• ascertaining the information gain indicator is effected during the scanning in real time for object points already scanned.

7. Method according to Claims 5 and 6,
**characterized in that**
the information gain indicator is determined on the basis of the estimated object surfaces, in particular depending on a variance of normal distances of object points of a neighborhood set with respect to the object surface estimated with respect thereto.

8. Method according to Claim 3 or any one of the preceding claims referring back to Claim 3,
**characterized in that**
the adaptation is effected in such a way that on the basis of the point density indicator a check is made point by point or region by region to establish whether a previously defined maximum value for the point density is exceeded and, in the case of the maximum value being exceeded, the point density is reduced, in particular by means of thinning out or averaging, in relation to the corresponding point or region.

9. Method according to Claim 3 or any one of the preceding claims referring back to Claim 3,
**characterized in that**
a selection of at least one region of interest (ROI) from the scanning region is effected depending on the point density indicator, in particular wherein in the context of the selection on the basis of the point density indicator a check is made point by point or region by region to establish whether a predetermined minimum point density is present.

10. Method according to Claim 6 or any one of the preceding claims referring back to Claim 6,
**characterized in that**
a selection of at least one region of interest (ROI) from the scanning region is effected depending on the information gain indicator, in particular wherein in the context of the selection on the basis of the information gain indicator a check is made point by point or region by region to establish whether the respective information gain indicator exceeds a predetermined threshold value.

11. Method according to Claim 9 or 10,
**characterized in that**
for the region of interest (ROI) the recorded point set is adapted by increasing the point density within the region of interest (ROI).

12. Method according to any one of Claims 9 to 11,
**characterized in that**
a second, in particular automatic, recording is effected in accordance with a second scanning pattern and second scanning region, wherein
• the second scanning region is defined depending on the region of interest (ROI), in particular corresponds thereto,
• the second scanning pattern is closer-meshed than the first scanning pattern, and
• the object points recorded in this case are taken into account in the adaptation of the recorded point set.

13. Method according to any one of the preceding claims,
**characterized in that**
• the scanning region is divided into individual regions and the adaptation is effected for each of the individual regions, and/or
• the quality of the measurement values of a respective object point, in particular the signal-to-noise ratio of the distance determined, is taken into account in the adaptation.

14. Computer program product, stored on a machine-readable carrier, or computer data signal, embodied by an electromagnetic wave, comprising program code suitable for carrying out the method according to any one of claims 1 to 13.

15. Surveying system with scanning functionality, in particular a laser scanner or a total station, wherein the surveying system comprises a control and evaluation unit,
**characterized in that**
the control and evaluation unit is designed for performing the scanning method according to claim 1.

## Revendications

1. Procédé de balayage pour dériver une information sur des surfaces d'objet pour un système d'arpentage présentant une unité de commande et d'évaluation avec fonctionnalité de balayage, en particulier un scanner laser ou une station totale, dans lequel on effectue, au moyen d'un processus de balayage, un premier enregistrement d'un ensemble de points à partir de points d'objet détectés au moyen d'un faisceau de mesure de l'appareil d'arpentage, par le fait que
• des objets sont balayés en modifiant continuellement l'orientation du faisceau de mesure selon un premier motif de balayage connu et une (première) zone de balayage,
• la distance respective au point d'objet et l'orientation respective du rayonnement de mesure émis pour une mesure de distance sont déterminées,
**caractérisé en ce que**
l'ensemble de points enregistré des points d'objet détectés est retenu dans une mémoire volatile de l'unité de commande et d'évaluation et, avant d'être stocké dans une mémoire permanente, l'unité de commande et d'évaluation effectue une adaptation, en particulier une réduction, de l'ensemble de points enregistré dans le cadre du processus de balayage en fonction d'au moins une densité de points de l'ensemble de points enregistré, de sorte qu'un ensemble de points adapté, en particulier réduit, est généré et, en cas de perte définitive de l'ensemble de points enregistré, seul l'ensemble de points adapté est stocké dans la mémoire permanente, au moins un indicateur de densité de points pour l'ensemble de points enregistré étant déterminé à partir des distances et orientations déterminées, et l'adaptation ayant lieu en fonction de l'indicateur de densité de points.

2. Procédé selon la revendication 1,
**caractérisé en ce que**
l'adaptation a lieu en adaptant, en particulier en réduisant par élagage et/ou calcul de moyenne la densité de points elle-même à l'intérieur d'au moins une zone partielle prédéterminée de la zone de balayage selon des critères de sélection prédéterminés.

3. Procédé selon la revendication 1 ou 2,
**caractérisé en ce que**
• la détermination de l'indicateur de densité de points pendant le processus de balayage a lieu en temps réel par rapport à des points d'objet déjà détectés et/ou
• l'indicateur de densité de points est basé sur des distances spatiales estimées de points d'objet détectés.

4. Procédé selon l'une des revendications précédentes,
**caractérisé en ce que**
dans le cadre de la détermination de l'indicateur de densité de points, on détermine un ensemble de voisinage qui représente des points d'objet voisins.

5. Procédé selon la revendication 4,
**caractérisé en ce que**
des surfaces d'objet et les normales à la surface associées sont estimées sur la base de l'ensemble de voisinage défini et les normales à la surface sont utilisées pour déterminer l'indicateur de densité de points.

6. Procédé selon l'une des revendications précédentes,
**caractérisé en ce que**
l'on détermine un indicateur de gain d'information pour des points d'objet balayés, qui indique le gain d'information sur la surface d'un objet respectif obtenu par le point d'objet respectif, en particulier dans lequel
• l'adaptation a lieu en outre en fonction de l'indicateur de gain d'information d'un point d'objet balayé respectif, des points d'objet dont l'indicateur de gain d'information dépasse une valeur de seuil prédéterminée étant en particulier transférés dans la mémoire permanente en tant que partie de l'ensemble de points adapté et/ou
• la détermination de l'indicateur de gain d'information a lieu en temps réel pendant le balayage pour des points d'objet déjà balayés.

7. Procédé selon les revendications 5 et 6,
**caractérisé en ce que**
l'indicateur de gain d'information est déterminé sur la base des surfaces d'objet estimées, en particulier en fonction d'une variance des distances normales de points d'objet d'un ensemble de voisinage par rapport à la surface d'objet estimée.

8. Procédé selon la revendication 3 ou l'une des revendications précédentes faisant référence à la revendication 3,
**caractérisé en ce que**
l'adaptation a lieu de telle sorte que l'on vérifie point par point ou zone par zone, au moyen de l'indicateur de densité de points, si une valeur maximale préalablement définie pour la densité de points est dépassée et, si la valeur maximale est dépassée, la densité de points est réduite, en particulier par élagage ou calcul de moyenne, en ce qui concerne le point ou la zone correspondant(e).

9. Procédé selon la revendication 3 ou l'une des revendications précédentes faisant référence à la revendication 3,
**caractérisé en ce**
**qu'**au moins une zone d'intérêt particulier (ROI) est sélectionnée dans la zone de balayage en fonction de l'indicateur de densité de points, un contrôle point par point ou zone par zone étant en particulier effectué, dans le cadre de la sélection, à l'aide de l'indicateur de densité de points, afin de déterminer si une densité de points minimale prédéterminée est présente.

10. Procédé selon la revendication 6 ou l'une des revendications précédentes faisant référence à la revendication 6,
**caractérisé en ce**
**qu'**au moins une zone d'intérêt particulier (ROI) est sélectionnée dans la zone de balayage en fonction de l'indicateur de gain d'information, un contrôle point par point ou zone par zone étant en particulier effectué, dans le cadre de la sélection, à l'aide de l'indicateur de gain d'information, afin de déterminer si l'indicateur de gain d'information respectif dépasse une valeur seuil prédéterminée.

11. Procédé selon la revendication 9 ou 10,
**caractérisé en ce que**,
pour la zone d'intérêt particulier (ROI), l'ensemble de points enregistré est en outre adapté en augmentant la densité de points à l'intérieur de la zone d'intérêt particulier (ROI).

12. Procédé selon l'une des revendications 9 à 11,
**caractérisé en ce**
**qu'**un deuxième enregistrement, en particulier automatique, a lieu selon un deuxième motif de balayage et une deuxième zone de balayage, dans lequel
• la deuxième zone de balayage est définie en fonction de la zone d'intérêt particulier (ROI), en particulier coïncide avec celle-ci,
• le deuxième motif de balayage présente un maillage plus étroit que le premier motif de balayage et
• les points d'objet enregistrés à cette occasion sont pris en compte dans l'adaptation de l'ensemble de points enregistré.

13. Procédé selon l'une des revendications précédentes,
**caractérisé en ce que**
• la zone de balayage est divisée en zones individuelles et l'adaptation est effectuée séparément pour chaque zone individuelle et/ou
• la qualité des valeurs de mesure d'un point d'objet respectif, en particulier le rapport signal sur bruit de la distance déterminée, est prise en compte dans l'adaptation.

14. Produit programme d'ordinateur stocké sur un support lisible par machine, ou signal de données informatiques matérialisé par une onde électromagnétique, avec un code de programme adapté à mettre en oeuvre le procédé selon l'une des revendications 1 à 13.

15. Système d'arpentage avec fonctionnalité de balayage, en particulier un scanner laser ou une station totale, lequel système d'arpentage présente une unité de commande et d'évaluation,
**caractérisé en ce que**
l'unité de commande et d'évaluation est conçue pour exécuter le procédé de balayage selon la revendication 1.
